# FASCICULE DE BREVET EUROPEEN

(11) **EP 0 996 929 B1**
(45) Date de publication et mention de la délivrance du brevet: **04.12.2002**
(21) Numéro de dépôt: 98935089.7
(22) Date de dépôt: 03.07.1998
(51) Int. Cl.: G06K 19/07, G06F 1/035

(54) **PROCEDE ET SYSTEME DE TRANSMISSION SOUS FORME VOCALE D'UNE SEQUENCE DE DONNEES BINAIRES A PARTIR D'UN TRANSDUCTEUR PIEZO-ELECTRIQUE**
VERFAHREN UND SYSTEM ZUR ÜBERTRAGUNG VON BINÄREN DATENFOLGEN IN SPRACHFORM AUS EINEM PIEZOELEKTRISCHEN WANDLER
METHOD AND SYSTEM FOR VOICE TRANSMISSION OF A BINARY DATA SEQUENCE FROM A PIEZOELECTRIC TRANSDUCER

(30) Priorité: 15.07.1997 FR 9708939
(43) Date de publication de la demande: 03.05.2000
(73) Titulaire: ELVA SA, 92100 Boulogne (FR)
(72) Inventeur: BALL, Eric, F-94160 Saint-Mandé (FR); COLNOT, Cédric, F-94200 Ivry-sur-seine (FR)
(74) Mandataire: Doireau, Marc
(86) Numéro de dépôt international: FR9801422
(87) Numéro de publication internationale: WO99004366

(56) Documents cités:
- WO-A-92/20048
- GB-A- 2 148 061
- US-A- 3 905 030

## Description

La présente invention concerne un procédé et un système de transmission sous forme vocale d'une séquence de données binaires à partir d'un transducteur piézo-électrique.

Il est maintenant courant d'utiliser une carte à mémoire ou carte à puce comme simple clé d'accès à un service ou comme moyen pour transférer des informations confidentielles ou non.

Dans la plupart des applications envisagées, l'accès à un service ou un transfert d'informations est précédé par l'exécution d'un protocole d'identification du type unidirectionnel ou bidirectionnel qui prend en compte au moins une séquence d'identification préenregistrée dans une mémoire de la carte.

Lorsque l'accès à un service se fait à distance, il est connu d'utiliser des cartes dites vocales où la séquence d'identification est convertie en un signal acoustique qui est transmis sur une ligne téléphonique au travers du microphone d'un combiné téléphonique.

D'une manière générale, la séquence d'identification est transmise par un transducteur piézo-électrique après avoir subi une modulation du type FSK ("Frequency Shift Keying") ou modulation par décalage de fréquence. Cette modulation consiste à émettre une onde porteuse avec une fréquence vocale différente suivant l'état logique du bit à transmettre. Par fréquence vocale, il faut entendre toute fréquence comprise dans la bande passante du réseau téléphonique. Ce type de modulation est reconnu comme étant celui le mieux adapté pour la transmission de données par couplage acoustique avec un téléphone, du fait que cette modulation est peu sensible à la variation d'amplitude du signal émis et au bruit.

Le signal logique résultant de la modulation FSK, qui serait appliqué au transducteur piézo-électrique, a une forme carrée qui est préjudiciable à une bonne conversion acoustique. En effet, un signal carré génère de nombreuses harmoniques ayant un niveau presque aussi élevé que la fréquence fondamentale. De tels harmoniques perturbent la transmission et sont particulièrement désagréables à l'oreille.

La carte de WO-A-92 20 048 souffre aussi de ce problème.

Le but de l'invention est de concevoir un procédé de transmission qui pallie les inconvénients précités tout en procurant d'autres avantages.

A cet effet, l'invention propose un procédé de transmission sous forme vocale d'une séquence de données binaires à partir d'un transducteur piézo-électrique, le procédé consistant :
- à définir une partie d'un signal de forme sinusoïdale à partir d'une succession d'impulsions ayant un état logique "0" ou "1",
- à générer une fréquence d'échantillonnage différente suivant l'état logique du bit de la séquence à transmettre,
- à lire la succession d'impulsions logiques à la fréquence d'échantillonnage correspondant à l'état logique du bit à transmettre pour obtenir un signal logique intermédiaire,
- à appliquer le signal logique intermédiaire, alternativement à l'une et à l'autre des deux bornes d'entrée du transducteur piézo-électrique, à une fréquence vocale différente suivant l'état logique du bit à transmettre, pour obtenir un signal d'excitation logique composé d'une alternance positive et d'une alternance négative,
- à reconstituer à partir du signal d'excitation logique un signal acoustique de forme sinusoïdale en utilisant la partie capacitive de l'impédance du transducteur piézo-électrique, et
- à faire émettre par le transducteur le signal acoustique de forme sinusoïdale à la fréquence vocale correspondant à l'état logique du bit à transmettre.

Selon le procédé, la partie du signal de forme sinusoïdale peut être défini à partir d'une succession de i impulsions logiques correspondant à une alternance positive ou négative du signal, à enregistrer cette succession d'impulsions dans un registre tournant de i bits, et à lire ce registre à la fréquence d'échantillonnage correspondant à l'état logique du bit à transmettre.

En variante, la partie du signal de forme sinusoïdale peut être défini à partir d'une succession de j impulsions logiques correspondant à une demi-alternance positive ou négative du signal, à enregistrer cette succession d'impulsions dans un registre tournant de j bits, et à lire ce registre de gauche à droite puis de droite à gauche à la fréquence d'échantillonnage correspondant à l'état logique du bit à transmettre.

Il est important de souligner que le procédé a été conçu pour ne travailler que sur des signaux logiques et à partir d'une seule base de temps, ce qui offre notamment l'avantage de pouvoir mettre en oeuvre le procédé avec des circuits logiques simples, fiables et peu coûteux.

En effet, toute solution analogique aboutit nécessairement à une mise en oeuvre complexe, délicate et coûteuse.

L'invention concerne également un système de transmission défini dans la revendication 5, un tel système pouvant être facilement intégré dans une carte à mémoire du type vocale, ayant des dimensions normalisées.

D'autres avantages, caractéristiques et détails de l'invention ressortiront du complément de description qui va suivre en référence à des dessins annexés, donnés uniquement à titre d'exemple et sur lesquels :
- la figure 1 représente sous la forme d'un schéma-bloc un système de transmission sous forme vocale d'une séquence de données binaires selon l'invention,
- la figure 2 illustre graphiquement une méthode d'échantillonnage classique pour définir un signal de forme sinusoïdale à partir d'une succession d'impulsions logiques,
- la figure 3 illustre graphiquement une méthode d'échantillonnage différente utilisée dans le système de transmission selon l'invention, et
- la figure 4 illustre de façon schématique le système de transmission selon l'invention qui est intégré dans une carte à mémoire du type vocale.

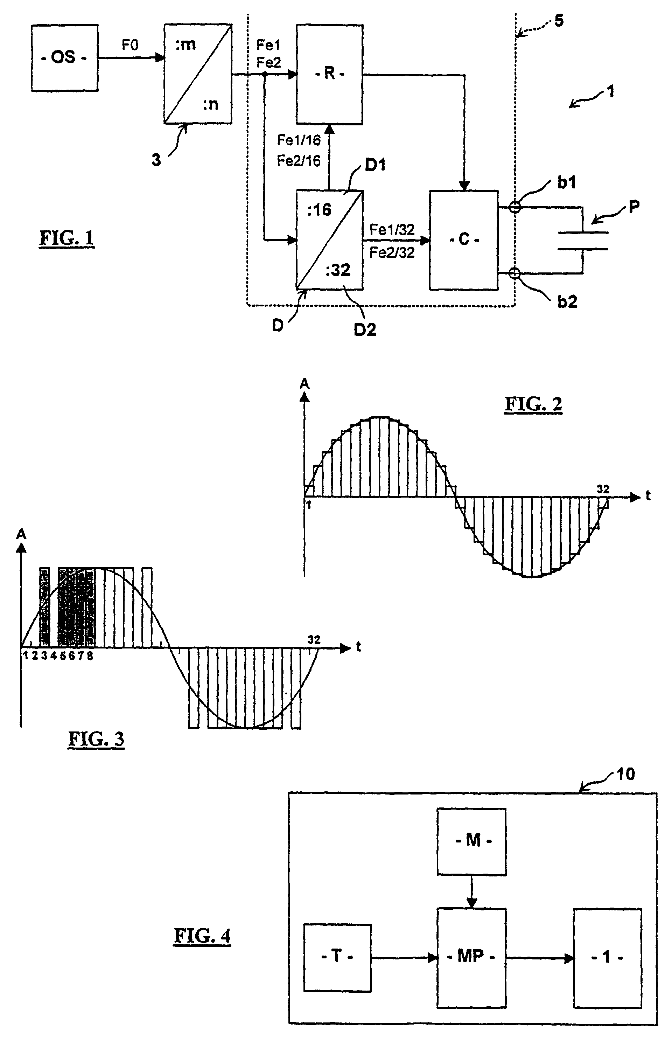

Le système de transmission 1 illustré sur la figure 1 est conçu pour transmettre sous forme vocale une séquence de données binaires à partir d'un transducteur piézo-électrique P.

Le système de transmission 1 comprend notamment :
- un oscillateur pilote OS qui délivre un signal périodique de fréquence F0,
- un circuit de modulation 3 du type FSK relié à l'oscillateur OS d'une part, et qui reçoit la séquence d'informations binaires à transmettre d'autre part, pour générer une fréquence d'échantillonnage différente Fe1 ou Fe2 suivant l'état logique du bit à transmettre,
- un circuit de traitement intermédiaire 5 relié au circuit de modulation 3 pour générer un signal logique intermédiaire, et
- le transducteur piézo-électrique P dont les deux bornes d'entrée b1 et b2 sont reliées au circuit de traitement intermédiaire 5 par un circuit de commutation C pour appliquer le signal logique intermédiaire, alternativement sur l'une et sur l'autre des bornes d'entrée b1 et b2, à une fréquence vocale différente suivant l'état logique du bit à transmettre.

Le circuit de modulation 3 du type FSK est par exemple constitué par un circuit diviseur par m et un circuit diviseur par n, et on affecte à ces deux circuits diviseurs les états logiques "0" et "1", respectivement.

D'une manière générale, le circuit intermédiaire 5 ne va travailler que sur des signaux logiques, et sa fonction est de générer un signal logique intermédiaire qui va être transmis au transducteur piézo-électrique P et permettre à ce dernier de reconstituer à partir de ce signal logique un signal acoustique de forme sinusoïdale et d'émettre ce signal à une fréquence vocale correspondant à l'état logique du bit à transmettre.

Avant de décrire le circuit intermédiaire 5, il est utile de se reporter à la figure 2 illustrant une méthode d'échantillonnage classique telle qu'utilisée dans GB-A-2 148 061 qui permet de définir et de reconstituer un signal de forme sinusoïdale à partir d'une succession de données numériques qui représentent des niveaux de tension. Dans l'exemple illustré, chaque niveau de tension A du signal est codé sur quatre bits par exemple, soit seize niveaux en tout, et une période du signal est définie par trente-deux échantillons. Dans cette méthode d'échantillonnage, la principale difficulté réside dans la génération analogique des niveaux de tension A.

Au contraire, selon une nouvelle méthode d'échantillonnage mise en oeuvre par le circuit intermédiaire 5, un signal de forme sinusoïdale peut être défini et reconstitué à partir d'impulsions ayant un état logique "0" et "1". Ces impulsions logiques, au nombre de trente-deux par exemple, sont choisies de manière à transmettre une quantité d'énergie équivalente à celle d'une sinusoïde. Concrètement, le signal de forme sinusoïdale est défini à partir d'une succession de i impulsions ayant un état logique "0" ou "1", ces impulsions logiques permettant de reconstituer au moins une alternance positive ou négative du signal sinusoïdal.

En variante, le signal de forme sinusoïdale est défini à partir de j impulsions logiques pour reconstituer au moins une demi-alternance positive ou négative du signal sinusoïdal. Ainsi, comme cela est illustré sur la figure 3, une demi-alternance positive du signal sinusoïdal pouvant être définie à partir d'une succession de huit impulsions logiques ayant les états "00101111", il suffit d'enregistrer ces huit états logiques dans un registre tournant de huit bits et de lire ensuite ce registre de gauche à droite puis de droite à gauche pour pouvoir reconstituer une alternance positive ou négative du signal sinusoïdal.

La fréquence du signal sinusoïdal obtenu dépendra de la fréquence d'échantillonnage, c'est-à-dire de la fréquence de lecture de ce registre. On réalisera ainsi une modulation FSK en alternant deux valeurs différentes de la fréquence d'échantillonnage. En outre, la forme d'onde du signal pourra être facilement modifiée, puisqu'elle dépend uniquement de la programmation du registre tournant.

D'une manière générale, on va utiliser la partie capacitive de l'impédance du transducteur piézo-électrique P en lui faisant jouer une fonction d'intégration pour reconstituer un signal acoustique de forme sinusoïdale à partir des impulsions logiques transmises par le circuit intermédiaire 5, sachant que cette impédance devient essentiellement capacitive lorsque le transducteur P est excité au voisinage de sa fréquence de résonance.

Concrètement, en se reportant à la figure 1, le circuit intermédiaire 5 comprend un registre tournant R de huit bits dans lequel on mémorise les huit états logiques "00101111" qui définissent une demi-alternance positive du signal sinusoïdal illustré sur la figure 3. Le registre R est relié à l'entrée d'un circuit de commutation C dont les deux sorties sont respectivement reliées aux deux bornes d'entrée b1 et b2 du transducteur piézo-électrique P. Le circuit intermédiaire 5 comprend également un étage D de génération de fréquence à partir de la fréquence d'échantillonnage Fe1 ou Fe2 délivrée par le circuit de modulation 3. Cet étage D comprend un circuit D1 diviseur par seize et un circuit D2 diviseur par trente-deux de la fréquence d'échantillonnage reçue Fe1 ou Fe2. La fréquence Fe1/16 ou Fe2/16 va piloter le sens de lecture du registre tournant R, alors que la fréquence Fe1/32 ou Fe2/32 va piloter le circuit de commutation C.

En se reportant à la figure 4, le système de transmission est complété par une mémoire M du type EEPROM dans laquelle est enregistrée la séquence de données binaires à transmettre, ainsi qu'un circuit de contrôle MP qui commande l'ensemble du système de transmission à partir d'une touche T, par exemple. Un tel système de transmission peut être intégré dans une carte à mémoire 10 du type vocale, ayant des dimensions normalisées.

Le système de transmission est activé par la touche T. L'oscillateur OS délivre une fréquence F0, et la séquence de données binaires enregistrée dans la mémoire M est transférée en série au circuit de modulation 3.

En sortie, le circuit de modulation 3 génère une fréquence d'échantillonnage Fe1 ou Fe2 suivant l'état logique du bit de la séquence à transmettre.

Supposons que l'état logique du bit à transmettre est "0".

Le circuit modulateur 3 utilise son circuit diviseur par m pour émettre une fréquence d'échantillonnage Fe1 = F0/m. Cette fréquence Fe1 est transmise au circuit intermédiaire 5 pour lire le contenu du registre R où ont été mémorisés les huit états logiques "00101111". Le sens de lecture du registre R est piloté par la fréquence Fi1 = Fe1/16 délivrée par le circuit diviseur D1 de l'étage D. Ainsi, le registre R va être lu à la fréquence Fe1, de gauche à droite puis de droite à gauche avec un changement du sens de lecture qui interviendra tous les huit coups d'horloge de la fréquence Fe1.

On obtient ainsi un signal logique intermédiaire à la fréquence Fe1 qui est reçu par le circuit de commutation C pour être appliqué, alternativement à l'une et à l'autre des deux bornes d'entrée b1 et b2 du transducteur piézo-électrique P, à une fréquence vocale Fs1 correspondant à l'état logique "0" du bit à transmettre. Cette fréquence est déterminée par le circuit diviseur D2 de l'étage D qui pilote le circuit de commutation C, à savoir la fréquence Fs1 = Fi1/2 = Fe1/32.

Ainsi, le signal logique intermédiaire est appliqué sur la borne b1 du transducteur P, puis sur la borne b2 tous les seize coups d'horloge définis par la fréquence Fe1, la borne b1 ou b2 à laquelle on n'applique pas le signal logique intermédiaire étant maintenue à un potentiel zéro volt pour pouvoir appliquer au transducteur P un signal d'excitation logique composé d'une alternance positive et d'une alternance négative, c'est-à-dire la même alternance de signaux mais avec une polarité différente.

Le transducteur piézo-électrique P reçoit donc un signal logique intermédiaire qui a une forme d'onde telle que celle illustrée sur la figure 3, et on utilise avantageusement la partie capacitive de l'impédance présentée par le transducteur P pour intégrer ce signal logique intermédiaire et obtenir un signal acoustique de forme sinusoïdale d'excitation du transducteur P.

Le transducteur P va ainsi émettre ce signal acoustique à une fréquence vocale Fs1 = Fe1/32 correspondant à l'état logique du bit à transmettre.

Pour transmettre un état logique "1", le circuit modulateur 3 délivre la fréquence d'échantillonnage Fe2 en utilisant le circuit diviseur par n, et le principe de fonctionnement reste identique à celui précédemment décrit mais pour transmettre en sortie du transducteur P un signal acoustique à une fréquence vocale Fs2 = Fe2/32.

A titre d'exemple, pour un transducteur piézo-électrique ayant une fréquence de résonance de l'ordre de 2 KHz, la fréquence F0 est choisie à 134,4 KHz, ce qui conduit à :
- Fe1 = 134,4/2 KHz
- Fe2 = 134,4/3 KHz
- Fs1 = 2100 Hz pour l'état logique "0", et
- Fs2 = 1400 Hz pour l'état logique "1".

Lorsque le système de transmission est intégré dans une carte dite vocale (figure 4) ayant des dimensions normalisées, cette carte peut alors être utilisée avec un combiné téléphonique pour transmettre une séquence d'identification binaire à un récepteur branché sur le réseau téléphonique. Ce récepteur peut être un serveur auquel l'utilisateur de la carte demande un accès qui ne sera validé qu'après authentification de la séquence d'identification par le serveur.

D'une manière générale, la séquence d'identification comprend au moins un identifiant, propre à la carte, auquel on peut ajouter un code d'authentification correspondant à un cryptogramme Ci calculé par la carte et dont la valeur est le résultat de l'exécution d'un algorithme itératif qui prend au moins en compte la valeur du cryptogramme précédent Cᵢ₋₁. Une telle séquence d'identification est notamment décrite dans la Demande de Brevet FR-96 01872.

La transmission d'une telle séquence d'identification peut nécessiter l'émission de l trames successives comprenant chacune k octets, ce qui implique une activation de la touche T de la carte 10 pendant une durée au moins égale à celle nécessaire pour transmettre les l trames de la séquence.

On peut alors concevoir un procédé et un système de transmission tels que l'activation de la touche T de la carte 10 provoque une émission répétitive des l trames l'une après l'autre tant que la touche T reste activée, et que la carte 10 finit d'émettre la trame en cours après relâchement de la touche T.

Dans ces conditions, on peut avantageusement compléter ce procédé et ce système de transmission par l'émission sur la ligne téléphonique d'un signal de retour audible transmis par le récepteur lorsqu'il aura reçu correctement les l trames de la séquence d'identification. Dès que l'utilisateur entend ce signal de retour dans l'écouteur du poste téléphonique, il peut alors relâcher son action sur la touche T de sa carte. Ensuite, l'accès au service demandé par l'utilisateur ne se fera qu'après authentification de la séquence d'identification par le serveur suite à l'exécution d'un protocole du type de celui décrit dans la Demande de Brevet précitée, par exemple.

## Revendications

1. Procédé de transmission sous forme vocale d'une séquence de données binaires à partir d'un transducteur (P) piézo-électrique, le procédé consistant :
- à définir une partie d'un signal de forme sinusoïdale à partir d'une succession d'impulsions ayant un état logique "0" ou "1",
- à générer une fréquence (Fe₁, Fe₂) d'échantillonnage différente suivant l'état logique du bit de la séquence à transmettre,
- à lire la succession d'impulsions logiques à la fréquence d'échantillonnage correspondant à l'état logique du bit à transmettre pour obtenir un signal logique intermédiaire,
- à appliquer le signal logique intermédiaire, alternativement à l'une et à l'autre des deux bornes (b₁, b₂) d'entrée du transducteur piézo-électrique, à une fréquence (Fₛ₁, Fₛ₂) vocale différente suivant l'état logique du bit à transmettre, pour obtenir un signal d'excitation logique composé d'une alternance positive et d'une alternance négative,
- à reconstituer à partir du signal d'excitation logique un signal acoustique de forme sinusoïdale en utilisant la partie capacitive de l'impédance du transducteur piézo-électrique, et
- à faire émettre par le transducteur le signal acoustique de forme sinusoïdale à la fréquence vocale correspondant à l'état logique du bit à transmettre.

2. Procédé selon la revendication 1, **caractérisé en ce qu'**il consiste à définir la partie du signal de forme sinusoïdale à partir d'une succession de i impulsions logiques correspondant à une alternance positive ou négative du signal, à enregistrer cette succession d'impulsions dans un registre tournant de i bits et à lire ce registre à la fréquence d'échantillonnage correspondant à l'état logique du bit à transmettre.

3. Procédé selon la revendication 1, **caractérisé en ce qu'**il consiste à définir la partie du signal de forme sinusoïdale à partir d'une succession de j impulsions logiques correspondant à une demi-alternance positive ou négative du signal, à enregistrer cette succession d'impulsions dans un registre tournant de j bits, et à lire ce registre de gauche à droite puis de droite à gauche à la fréquence d'échantillonnage correspondant à l'état logique du bit à transmettre.

4. Procédé selon l'une quelconque des revendications précédentes, **caractérisé en ce que**, pour transmettre à un récepteur par un combiné téléphonique une séquence de données binaires correspondant à une séquence d'identification à partir du transducteur piézo-électrique intégré dans une carte (10) à mémoire du type vocale et activé par un utilisateur à partir d'une touche (T) de la carte, le procédé consiste :
- à décomposer la séquence d'identification en l trames successives comprenant chacune k octets,
- à faire émettre de façon répétitive par le transducteur piézo-électrique les l trames l'une à la suite de l'autre tant que la touche est activée, et
- à faire émettre par le récepteur un signal de retour audible sur la ligne téléphonique après la réception correcte des l trames pour informer l'utilisateur qu'il peut relâcher son action sur la touche de sa carte.

5. Système de transmission pour transmettre sous forme vocale une séquence de données binaires, le système comprenant :
- un oscillateur pilote (OS) qui délivre un signal périodique de fréquence (F0),
- un circuit de modulation (3) du type FSK relié à l'oscillateur pilote (OS) d'une part, et qui reçoit la séquence de données binaires à transmettre d'autre part, pour générer une fréquence d'échantillonnage différente (Fe1 ou Fe2) suivant l'état logique du bit à transmettre,
- un circuit de traitement intermédiaire (R, D) relié au circuit de modulation (3),le circuit de traitement intermédiaire définissant une partie d'un signal de forme sinusoïdale à partir d'une succession d'impulsions ayant un état logique "0" ou "1", et lisant la succession d'impulsions logiques à la fréquence (Fe1,Fe2) d'échantillonnage correspondant à l'état logique du bit à transmettre pour générer un signal logique intermédiaire, et
- un transducteur piézo-électrique (P) dont les deux bornes d'entrée (b1, b2) sont reliées au circuit de traitement intermédiaire (R, D) par un circuit de commutation (C) pour appliquer le signal logique intermédiaire, alternativement sur l'une et sur l'autre des bornes d'entrée (b1, b2) du transducteur piézo-électrique (P), à une fréquence (Fₛ₁, Fₛ₂) vocale différente suivant l'état logique du bit à transmettre pour obtenir un signal d'excitation logique composé d'une alternance positive et d'une alternance négative, le transducteur (P) intégrant ce signal d'excitation logique pour reconstituer un signal acoustique de forme sinusoïdale et émettant ce signal acoustique à la fréquence vocale correspondant à l'état logique du bit à transmettre.

6. Système selon la revendication 5, **caractérisé en ce que** le circuit de modulation (3) est constitué par deux circuits diviseurs de fréquence par m et n auxquels on affecte les états logiques "0" et "1", respectivement.

7. Système selon la revendication 5 ou 6, **caractérisé en ce que** le circuit intermédiaire (R, D) comprend au registre tournant (R) de plusieurs bits dans lesquels sont mémorisés des états logiques "0" ou "1" correspondant à la succession d'impulsions logiques qui définissent une partie du signal de forme sinusoïdale, le registre (R) étant relié au circuit de commutation (C), et **en ce que** le circuit intermédiaire (R, D) comprend également deux circuits diviseurs de fréquence (D1, D2) pour piloter respectivement le sens de lecture du registre tournant (R) et le circuit de commutation (C).

8. Système selon l'une quelconque des revendications 5 à 7, **caractérisé en ce qu'**il est intégré dans une carte à mémoire (10) du type vocale, ayant des dimensions normalisées.

## Claims

1. A method of transmitting a binary data sequence in voice form from a piezoelectric transducer (P), the method consisting:
· in defining a portion of a sinewave signal from a stream of pulses each having a logic "0" or a logic "1" state;
· in generating a sampling frequency (Fe1, Fe2) that differs depending on the logic state of the bit of the sequence that is to be transmitted;
· in reading the stream of logic pulses at the sampling frequency corresponding to the logic state of the bit to be transmitted so as to obtain an intermediate logic signal;
· in applying the intermediate logic signal altemately to one and then to the other of two input terminals (b1, b2) of a piezoelectric transducer, at a voice frequency (Fs1, Fs2) that differs depending on the logic state of the bit to be transmitted, so as to obtain a logic excitation signal made up of a positive half-cycle and of a negative half-cycle;
· in reconstituting an acoustic signal having a sinusoidal waveform from the logic excitation signal by making use of the capacitive portion of the impedance of the piezoelectric transducer; and
· in causing the transducer to emit the acoustic signal of sinusoidal waveform at the voice frequency which corresponds to the logic state of the bit to be transmitted.

2. A method according to claim 1, **characterized in that** it consists in defining the portion of the sinewave signal from a stream of i logic pulses corresponding to a positive or a negative half-cycle of the signal, in storing said stream of pulses in an i-bit rotary register, and in reading said register at the sampling frequency corresponding to the logic state of the bit to be transmitted.

3. A method according to claim 1, **characterized in that** it consists in defining the portion of the sinewave signal from a stream of j logic pulses corresponding to a positive or a negative quarter-cycle of the signal, in recording said stream of pulses in a j-bit rotary register, and in reading said register from left to right and then from right to left at the sampling frequency corresponding to the logic state of the bit to be transmitted.

4. A method according to any preceding claim, **characterized in that** to transmit a binary data sequence corresponding to an identification sequence via a telephone handset and from a piezoelectric transducer integrated in a voice type memory card (10) and activated by a user using a key (T) on the card, the method consists:
· in subdividing the identification sequence into *l* successive frames each comprising k bytes;
· in causing the piezoelectric transducer to emit the *l* frames one after the other in repetitive manner so long as the key is activated; and
· in causing the receiver to emit an audible return signal over the telephone line after it has correctly received the *l* frames so as to inform the user that the key on the card can be released.

5. A transmission system for transmitting a binary data sequence in voice form, the system comprising:
· a pilot oscillator (OS) delivering a periodic signal of frequency (F0);
· a modulator circuit (3) of the FSK type connected to the pilot oscillator (OS) and also receiving the binary data sequence to be transmitted, so as to generate a sampling frequency that differs (Fe1 or Fe2) depending on the logic state of the bit to be transmitted;
· an intermediate processor circuit (R, D) connected to the modulator circuit (3), the intermediate processor circuit defining a portion of a sinewave signal from a stream of pulses each having a logical "0" or a logic "1" state, and reading the stream of logical pulses at the sampling frequency (Fe1, Fe2) corresponding to the logic state of the bit to be transmitted so as to generate an intermediate logic signal; and
a piezoelectric transducer (P) whose two input terminals (b1, b2) are connected to the intermediate processor circuit (R, D) via a switch circuit (3) for applying the intermediate logic signal alternately to one and to the other of the input terminals (b1, b2) of the piezoelectric transducer (P) at a voice frequency (Fs1, Fs2) that differs depending on the logic state of the bit to be transmitted so as to obtain a logic excitation signal made up of a positive half-cycle and of a negative half-cycle, the transducer (P) integrating said logic signal so as to reconstitute an acoustic signal having a sinusoidal waveform and emitting said acoustic signal at the voice frequency corresponding to the logic state of the bit to be transmitted.

6. A system according to claim 5, **characterized in that** the modulator circuit (3) is constituted by two frequency divider circuits respectively for dividing by m and for dividing by n which circuits are allocated to the logic states "0" and "1" respectively.

7. A system according to claim 5 or 6, **characterized in that** the intermediate circuit (R, D) comprises a multiple-bit rotary register (R) storing logic states "0" or "1" corresponding to the succession of logic pulses which define a portion of the sinewave signal, the register (R) being connected to the switch circuit (C), and **in that** the intermediate circuit (R, D) also comprises two frequency divider circuits (D1, D2) for driving respectively the direction in which the rotary register (R) is read and the switch circuit (C).

8. A system according to any one of claims 5 to 7, **characterized in that** it is integrated in a voice type memory card (10) of standard dimensions.

## Patentansprüche

1. Verfahren zur Übertragung von binären Datenfolgen in Sprachform aus einem piezoelektrischen Wandler, wobei das Verfahren darin besteht:
- einen Teil eines sinusförmigen Signals aus einer Folge von Impulsen, welche einen logischen Zustand 0 oder 1 haben, festzulegen,
- gemäß dem logischen Zustand des Bits der zu übertragenden Sequenz eine unterschiedliche Samplingfrequenz (Fe1, Fe2) zu erzeugen,
- die Abfolge von logischen Impulsen bei der Samplingfrequenz, welche dem logischen Zustand des zu sendenden Bits entspricht, zu lesen, um ein logisches Zwischensignal zu erhalten,
- das logische Zwischensignal mit einer unterschiedlichen Sprachfrequenz (Fs1, Fs2) gemäß dem logischen Zustand des zu übertragenden Bits abwechselnd an die eine und die andere der zwei Eingangsklemmen (b1, b2) des piezoelektrischen Wandlers anzulegen, um ein logisches Anregungssignal zu erhalten, welches aus einer positiven Halbperiode und einer negativen Halbperiode zusammengesetzt ist,
- aus dem logischen Anregungssignal durch Verwendung des kapazitiven Teils der Impedanz des piezoelektrischen Wandlers ein sinusförmiges akustisches Signal wiederherzustellen, und
- zu veranlassen, dass durch den Wandler das sinusförmige akustische Signal bei der Sprachfrequenz, welche dem logischen Zustand des zu übertragenden Bits entspricht, emittiert wird.

2. Verfahren nach Anspruch 1,
**dadurch gekennzeichnet, dass**
es darin besteht, den Teil des sinusförmigen Signals aus einer Folge von i logischen Impulsen, welche einer positiven oder negativen Halbwelle des Signals entsprechen, festzulegen, diese Abfolge von Impulsen in einem Drehregister mit i Bits aufzuzeichnen und dieses Register mit der Sampling-Frequenz, welche dem logischen Zustand des zu sendenden Bits entspricht, zu lesen.

3. Verfahren nach Anspruch 1,
**dadurch gekennzeichnet, dass**
es darin besteht, den Teil des sinusförmigen Signals aus einer Folge von j logischen Impulsen, welche einer halben positiven oder negativen Kalbwelle des Signals entsprechen, festzulegen, diese Abfolge von Impulsen in einem Drehregister mit j Bits abzuspeichern und dieses Register bei der Sampling-Frequenz, welche dem logischen Zustand des zu übertragenden Bits entspricht, von links nach rechts und dann von rechts nach links zu lesen.

4. Verfahren nach einem der vorhergehenden Ansprüche,
**dadurch gekennzeichnet, dass**
das Verfahren, um an einen Empfänger über ein Telefon eine Abfolge von binären Daten, welche einer Identifikationsabfolge entspricht, aus einem piezoelektrischen Wandler, welcher in eine Speicherkarte (10) des Sprachtyps integriert ist und durch einen Benutzer mit einer Berührung einer Taste der Karte aktiviert wird, zu übertragen, darin besteht:
- die Identifikationsabfolge in l aufeinanderfolgende Blöcke, welche jeweils k Oktette umfassen, zu zerlegen,
- zu veranlassen, dass durch den piezoelektrischen Wandler die l Blöcke einer nach dem anderen in wiederholender Art und Weise emittiert werden, solange die Taste aktiviert ist, und
- zu veranlassen, dass durch den Empfänger nach dem korrekten Empfang der l Blöcke ein hörbares Rücksignal über die Telefonleitung gesendet wird, um den Benutzer zu informieren, dass er seine Handlung bezüglich der Taste seiner Karte beenden kann.

5. Übertragungssystem, um binäre Datenfolgen in Sprachform zu übertragen, welches Folgendes umfasst:
- einen Steueroszillator (OS), der ein periodisches Signal einer Frequenz (F0) liefert,
- eine Modulationsschaltung (3) vom Typ FSK, die auf einer Seite mit dem Steueroszillator (OS) verbunden ist und auf der anderen Seite die zu übertragende Abfolge von binären Daten empfängt, um eine unterschiedliche Sampling-Frequenz (Fe1 oder Fe2) gemäß dem logischen Zustand des zu übertragenden Bits zu erzeugen,
- Zwischenbehandlungsschaltung (R, D), die mit der Modulationsschaltung (3) verbunden ist, um ein logisches Zwischensignal zu erzeugen, wobei die Zwischenbehandlungsschaltung einen Teil eines sinusförmigen Signals aus einer Folge von Impulsen, welche einen logischen Zustand 0 oder 1 haben, festlegt, und die Abfolge von logischen Impulsen bei der Samplingfrequenz (Fe1, Fe2), welche dem logischen Zustand des zu übertragenden Bits entspricht, liest, und
- einen piezoelektrischen Wandler (P), dessen zwei Eingangsklemmen (b1, b2) mit der Zwischenbehandlungsschaltung (R, D) durch einen Schaltkreis (C) verbunden sind, um das logische Zwischensignal bei einer unterschiedlichen Sprachfrequenz (Fs1, Fs2) gemäß dem logischen Zustand des zu übertragenden Bits abwechselnd an der einen und an der anderen Eingangsklemme (b1, b2) des piezoelektrischen Wandlers (P) anzulegen, um ein logisches Anregungssignal, welches aus einer positiven Halbwelle und einer negativen Halbwelle zusammengesetzt ist, zu erhalten, wobei der Wandler (P) dieses logische Anregungssignal integriert, um ein sinusförmiges akustisches Signal wiederzuerhalten, und dieses akustische Signal bei der Sprachfrequenz, die dem logischen Zustand des zu übertragenden Bits entspricht, überträgt.

6. System nach Anspruch 5,
**dadurch gekennzeichnet, dass**
die Modulationsschaltung (3) aus zwei Frequenzteilern durch m und n besteht, mit denen man die logischen Zustände 0 bzw. 1 bestimmt.

7. System nach Anspruch 5 oder 6,
**dadurch gekennzeichnet, dass**
die Zwischenschaltung (R, D) im Drehregister (R) eine Mehrzahl von Bits umfasst, in denen die logischen Zustände 0 oder 1 gespeichert sind, welche der Abfolge von logischen Impulsen, welche einen Teil des sinusförmigen Signals bestimmen, entsprechen, wobei das Register (R) mit dem Schaltkreis (C) verbunden ist, und dass die Zwischenschaltung (R, D) ebenfalls zwei Frequenzteiler (D1, D2) zur Steuerung der Ausleserichtung des Drehregisters (R) bzw. des Schaltkreises (C) umfasst.

8. System nach einem der Ansprüche 5 bis 7,
**dadurch gekennzeichnet, dass**
es in einer Speicherkarte (10) des Sprachtyps integriert ist, die normierte Abmessungen hat.
